# EUROPÄISCHE PATENTSCHRIFT

(11) **EP 2 193 868 B1**
(45) Veröffentlichungstag und Bekanntmachung des Hinweises auf die Patenterteilung: **20.03.2013**
(21) Anmeldenummer: 09014933.7
(22) Anmeldetag: 02.12.2009
(51) Int. Cl.: B23K 1/00, B23K 1/005, B23K 1/19, B23K 26/32, B32B 15/08, B60R 13/08, B62D 25/10, B62D 27/02

(54) **Verfahren zum Fügen von Sandwichblechen mit einer Unterstruktur durch Löten oder Laserlöten mit verdoppeltem Blechrand ; Anbauteil für eine Kfz-Karrosserie mit solcher Anrdnung**
Method of joining a sandwich sheet with a sub structure through brazing or laser brazing with double bordure : Workpiece for carbody with such arrangement
Méthode d'assemblage d'une tôle sandwich avec une sous structure par brasage ou par brasage laser avec une bordure doublée ; Pièce pour carrosserie automotile avec un tel arrangement

(30) Priorität: 04.12.2008 DE 102008060506
(43) Veröffentlichungstag der Anmeldung: 09.06.2010
(73) Patentinhaber: ThyssenKrupp System Engineering GmbH, 74076 Heilbronn (DE)
(72) Erfinder: Lösch, Alfred, 66636 Tholey-Hasborn (DE)
(74) Vertreter: Kirchner, Sven

(56) Entgegenhaltungen:
- EP-A2- 1 251 063
- DE-A1- 3 733 568
- DE-A1- 4 221 251
- DE-A1-102007 002 856

## Beschreibung

Die Erfindung bezieht sich auf ein Verfahren zum Fügen eines Sandwichbleches, vorzugsweise als Außenhaut einer Kfz-Karosserie mit einer Unterstruktur nach Anspruch 1 und auf ein Anbauteil einer Kfz-Karosserie nach Anspruch 5 (siehe, z.B., DE 42 21 251 A).

Sandwichbleche, die auch allgemein als Leichtbleche bezeichnet werden, zeichnen sich durch ein niedriges Gewicht in Verbindung mit einer hohen Beulsteifigkeit aus. Um dieses zu erreichen, besteht der Werkstoff aus möglichst dünnen Deckblechen aus Stahl, vorzugsweise mit einer Dicke von 0,2 - 0,4 mm und einer dazwischen liegenden Kernschicht aus Kunststoff mit einer Dicke von vorzugsweise 0,4 - 0,7 mm. Diese sehr dünnen Deckbleche erweisen sich bei den gängigen Fügetechniken als sehr problematisch. So ist z. B. ein Falzen dieser Leichtbleche nicht unproblematisch. Grund hierfür sind die hohen Spannungen im Knickbereich des Flansches, die zu einem Reißen bzw. Ausbeulen des Deckbleches führen können. Ein Schweißen der Sandwichbleche scheidet in der Regel aus, weil die Deckbleche zu dünn sind und insbesondere wegen der hohen Temperaturen beim Schweißen beschädigt bzw. zerstört werden können. Empfohlen werden daher übliche mechanische Fügetechniken (z. B. Nieten, Schrauben) oder Kleben. Mit diesen Fügetechniken ist aber in der Karosserietechnik meist keine ausreichend dauerfeste Verbindung erreichbar.

Der Erfindung liegt daher die Aufgabe zu Grunde, ein Verfahren zum Fügen von Sandwichblechen vorzugsweise mit der Unterkonstruktion einer Kfz-Karosserie und ein entsprechendes Anbauteil vorzuschlagen, bei dem eine dauerhafte Verbindung hergestellt wird und eine Beschädigung der Deckbleche des Sandwichbleches vermieden werden kann.

Die Lösung dieser Aufgabe ist in den Patentansprüchen 1 und 5 beschrieben. Die Unteransprüche 2 - 4 enthalten sinnvolle ergänzende Verfahrensvorschläge.

Bei dem erfindungsgemäßen Verfahren zum Fügen eines Sandwichbleches mit einer Unterkonstruktion einer Kfz-Karosserie wird vorgeschlagen, dass das Sandwichblech durch Löten oder Laserlöten mit dem zuvor insbesondere durch Falzen zumindest gedoppelten oder in sonstiger Weise in seiner Dicke zumindest verdoppelten Rand eines Vollbleches verbunden wird, wobei die Wärmeenergie in Richtung des Vollbleches , gemäß der Erfindung, abgeleitet wird, um eine Beschädigung der dünnen Deckbleche und der Kunststoff-Kernschicht durch eine zu hohe Temperatureinwirkung zu verhindern. Um die Wärmeenergie prozesssicher aufnehmen zu können ist daher vorgesehen, dass das Vollblech an seinem Rand möglichst dick ist. Das kann dadurch erreicht werden, dass der Rand des Vollbleches ein oder mehrmals umgebogen wird, um eine Verdickung im relevanten Fügebereich zu erreichen. Es kann aber auch ein schmaler Randstreifen eines erheblich dickeren Bleches angeschweißt sein oder durch Umformung erzeugt werden.

Außerdem hat es sich als günstig erwiesen, beim Laserlöten den Laserstrahl möglichst weit auf den verdickten Randbereich des Voll bleches zu richten.

Des Weiteren wird durch die Doppelung des Vollbleches eine wesentlich bessere Führung des Lötdrahtes erreicht, was für eine prozesssichere Lötung unerlässlich ist.

Um den optischen Anforderungen bei Verwendung der Sandwichbleche als Außenhaut im Karosseriebau gerecht zu werden, hat es sich als günstig erwiesen, den Fügebereich in den sog. nicht sichtbaren Bereicht der Außenhaut zu verlegten. Dazu ist erfindungsgemäß vorgesehen, dass der Rand des Sandwichbleches vor dem Fügen um bis zu 120°, vorzugsweise um ca. 90° nach innen umzubiegen und anschließend mit dem gedoppelten Rand des Vollbleches zu verbinden. Der gedoppelte Randbereich des Vollbleches wird dabei vorzugsweise außen auf den umgebogenen Rand des Sandwichbleches aufgelegt und durch Laserlöten mit diesem verbunden.

Mit dem erfindungsgemäßen Verfahren können insbesondere großflächige Bauteile bzw. Klappen für eine Kfz-Karosserie hergestellt werden, die erheblich leichter sind als bisher übliche Bauteile. Mit den Sandwichblechen mit der Kernschicht aus Kunststoff kann die Biegesteifigkeit überproportional erhöht werden. Außerdem sorgen diese Verbundbleche für eine größere akustische Dämpfung. Schließlich kann mit einer möglichst umlaufenden Laserlötnaht eine ausreichende Dichtigkeit gewährleistet werden.

Die Erfindung wird anhand der beigefügten Figuren 1 - 3 beispielsweise näher erläutert. Es zeigen
- Fig. 1: in schematischer Darstellung ein Sandwichblech (1) in Abstand zur Unterstruktur (2) vor dem Fügen
- Fig. 2: das gefügte Anbauteil im Zusammenbau (3)
- Fig. 3: einen Schnitt nach der Linie A-A von Fig. 2.

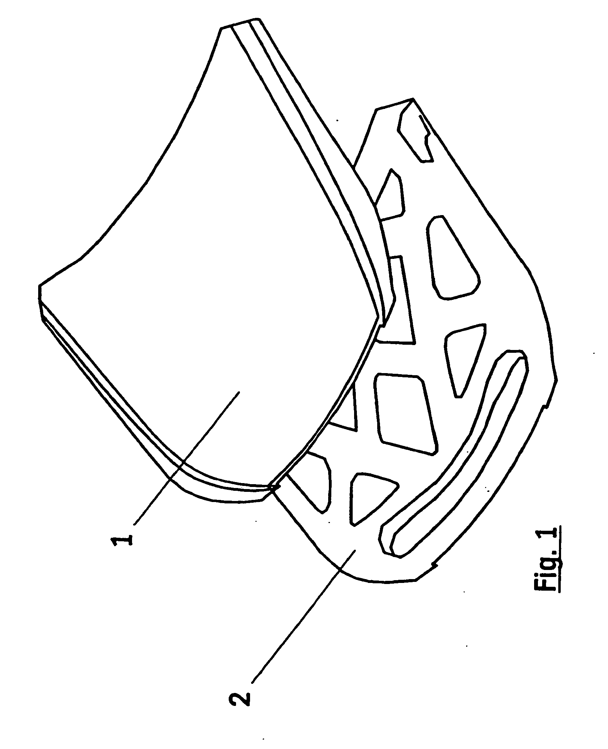

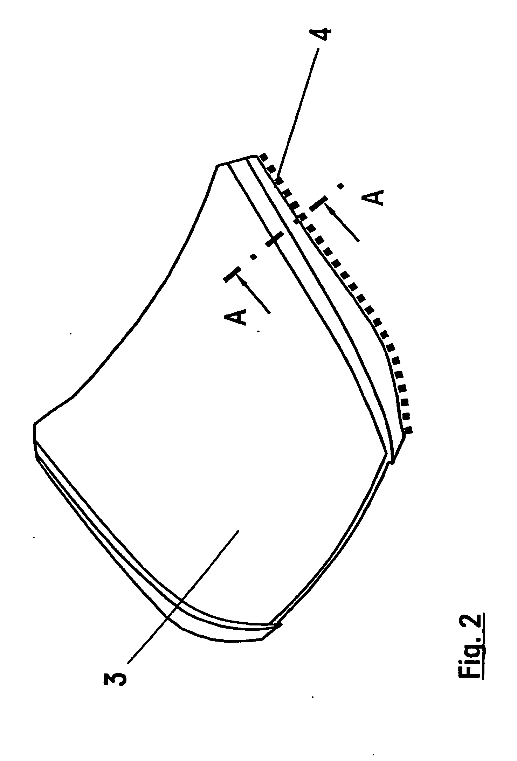

In Fig. 1 ist ein Sandwichblech 1, das z. B. die Außenhaut einer Motorhaube oder einer Fahrzeugtür sein kann, perspektivisch vor dem Zusammenfügen mit einer Unterstruktur 2 einer Kfz-Karosserie dargestellt. Bei dem Zusammenbau 3 nach Fig. 2 ist die Laserstrahl-Lötkontur 4 nur schematisch angedeutet.

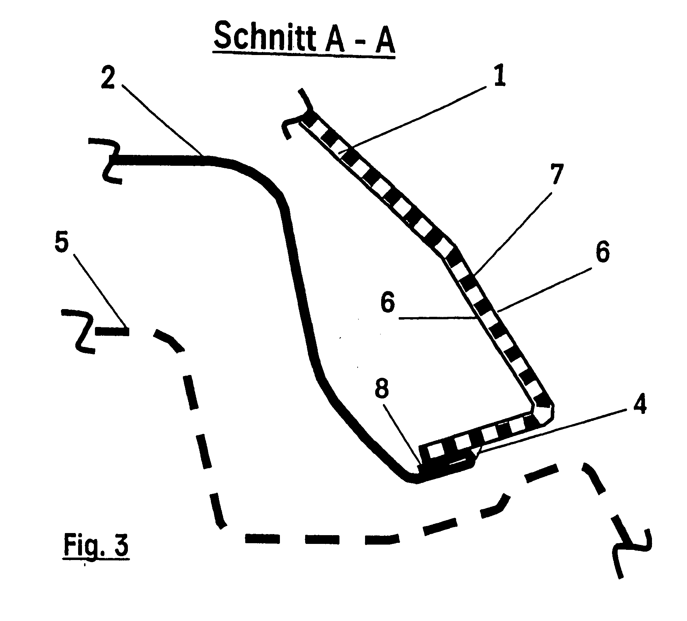

Nach Fig. 3 besteht das Sandwichblech 1 aus zwei äußeren dünnen Deckblechen 6 und einer dazwischen liegenden Kernschicht 7 aus Kunststoff, vorzugsweise aus einem thermoplastischen Polymer. Im Fügebereich ist das Sandwichblech um etwas mehr als 90° umgebogen und mit dem vollstandig umgeknickten Rand 8 des Vollbleches der Unterstruktur 2 durch die Laserstrahl-Lötkontur 4 verbunden. Diese Fügestelle befindet sich insgesamt in einem von außen nicht sichtbaren Bereich der Außenhaut bzw. des Sandwichbleches 1. In Fig. 3 ist zusätzlich ein Nachbarbauteil 5 der Kfz-Karosserie durch eine gestrichelte Linie andeutungsweise dargestellt. Bei dem Ausschnitt nach der Fig. 3 könnte es sich z. B. um eine Tür als Anbauteil handeln, das aus dem Sandwichblech 1 und der Unterstruktur 2 gebildet ist, wobei es sich bei dem Nachbarbauteil 5 um die Türöffnung handelt.

### Bezugszeichenliste

- 1: Sandwichblech
- 2: Unterstruktur (Vollblech)
- 3: Zusammenbau (von 1 und 2)
- 4: Laserstrahl-Lötkontur
- 5: Nachbarbauteil
- 6: Deckblech (von 1, aus Stahl)
- 7: Kernschicht (von 1, aus Kunststoff)
- 8: Rand (von 2, umgebogen)

## Patentansprüche

1. Verfahren zum Fügen eines Sandwichbleches (1) mit einer Unterstruktur (2), wobei das Sandwichblech (1) aus einem Verbundwerkstoff mit zwei dünnen Deckblechen (6) aus Stahl und einer dazwischen liegenden Kernschicht (7) aus Kunststoff, insbesondere einem thermoplastischen Polymer, besteht und die Unterstruktur (2) aus einem Vollblech, vorzugsweise aus Stahl, besteht, **dadurch gekennzeichnet, dass**
- das Sandwichblech (1) durch Löten oder Laserlöten mit dem zuvor zumindest gedoppelten oder in sonstiger Weise in seiner Dicke zumindest verdoppelten Rand (8) des Vollbleches verbunden wird,
- wobei die Verdoppelung des Randes (8) des Vollbleches dergestalt ist, dass hierdurch die beim Lötvorgang auftretende Wärmeenergie in Richtung des Vollbleches abgeleitet wird, um eine Beschädigung der dünnen Deckbleche (6) und der Kunststoff-Kernschicht (7) durch eine zu hohe Temperatureinwirkung zu verhindern.

2. Verfahren nach Anspruch 1, **dadurch gekennzeichnet, dass** das Sandwichblech (1) vorzugsweise als Außenhaut einer Kfz-Karosserie ausgebildet und die Unterstruktur (2) vorzugsweise durch die Unterstruktur (2) einer KFZ-Karosserie gebildet ist.

3. Verfahren nach Anspruch 1 oder 2, **dadurch gekennzeichnet, dass** der Rand des Sandwichbleches (1) vor dem Fügen mit dem Vollblech um bis zu 120° umgebogen wird und anschließend an seiner Außenseite mit dem Rand (8) des Vollbleches verbunden wird.

4. Verfahren nach einem der Ansprüche 1-3, **dadurch gekennzeichnet, dass** beim Laserlösen der Laserstrahl überwiegend auf den Rand (8) gerichtet ist.

5. Anbauteil einer Kfz-Karosserie mit einem Sandwichblech (1) als Außenhaut und einer aus einem Vollblech bestehenden Unterstruktur (2), wobei das Sandwichblech (1) aus einem Verbundwerkstoff mit zwei dünnen Deckblechen (6) aus Stahl und einer dazwischen liegenden Kernschicht (7) aus Kunststoff, insbesondere einem thermoplastischen Polymer besteht, **dadurch gekennzeichnet, dass** der Rand des Sandwichbleches (1) um bis zu 120° nach innen umgebogen ist und in einem nicht sichtbaren Bereich durch eine Laserstrahl- Lötkontur (4) mit dem an seinem Rand (8) zumindest gedoppelten oder in seiner Dicke zumindest verdoppelten Vollblech der Unterstruktur (2) verbunden ist, wobei die Verdoppelung des Randes (8) des Vollbleches dergestalt ist, dass hierdurch die beim Lötvorgang auftretende Wärmeenergie in Richtung des Vollbleches abgeleitet wird, um eine Beschädigung der dünnen Deckbleche (6) und der Kunststoff-Kernschicht (7) durch eine zu hohe Temperatureinwirkung zu verhindern.

## Claims

1. Method for joining a sandwich plate (1) having a bottom structure (2), wherein the sandwich plate (1) consists of a composite material with two thin cover sheets (6) of steel and a core layer (7) of synthetic material, in particular a thermoplastic polymer, therebetween, and the bottom structure (2) consists of a solid metal sheet, preferably of steel, **characterised in that**
- the sandwich plate (1) is connected by soldering or laser soldering to the edge (8) of the solid metal sheet, the edge being previously at least doubled or otherwise at least doubled in its thickness,
- wherein the doubling of the edge (8) of the solid metal sheet is such that by this means the heat energy occurring during the soldering process is discharged in the direction of the solid metal sheet in order to prevent damage to the thin cover sheets (6) and the synthetic material core layer (7) by the effect of excessively high temperature.

2. Method as claimed in claim 1, **characterised in that** the sandwich plate (1) is preferably formed as a body shell of a motor vehicle body and the bottom structure (2) is formed preferably by the bottom structure (2) of a motor vehicle body.

3. Method as claimed in claim 1 or 2, **characterised in that** the edge of the sandwich plate (1) is bent over through up to 120° before joining to the solid metal sheet and is then connected on its outside to the edge (8) of the solid metal sheet.

4. Method as claimed in any one of claims 1 to 3, **characterised in that** during laser soldering the laser beam is directed predominantly onto the edge (8).

5. Attachment part for a motor vehicle body having a sandwich plate (1) as the body shell and a bottom structure (2) consisting of a solid metal sheet, wherein the sandwich plate (1) consists of a composite material with two thin cover sheets (6) of steel and a core layer (7) of synthetic material, in particular a thermoplastic polymer, therebetween, **characterised in that** the edge of the sandwich plate (1) is bent over inwards through up to 120° and in a non-visible region is connected by a laser beam soldering contour (4) to the solid metal sheet of the bottom structure (2), the solid metal sheet being at least doubled at its edge (8) or at least doubled in its thickness, wherein the doubling of the edge (8) of the solid metal sheet is such that by this means the heat energy occurring during the soldering process is discharged in the direction of the solid metal sheet in order to prevent damage to the thin cover sheets (6) and the synthetic material core layer (7) by the effect of excessively high temperature.

## Revendications

1. Procédé d'assemblage d'une tôle sandwich (1) avec une sous-structure (2), sachant que la tôle sandwich (1) consiste en matériau composite, avec deux fines couches de couverture (6) en acier et une couche noyau (7) intermédiaire en matière synthétique, en particulier en polymère thermoplastique, et que la sous-structure (2) est en tôle pleine, de préférence en acier,
**caractérisé en ce que**
- la tôle sandwich (1) est reliée par brasage ou par brasage au laser au bord (8) de la tôle pleine, au moins préalablement replié sur lui-même ou dont l'épaisseur a été doublée de manière quelconque,
- sachant que le doublage du bord (8) de la tôle pleine est réalisé de sorte que l'énergie thermique, générée lors du processus de brasage, se trouve ainsi dérivée en direction de la tôle pleine pour empêcher que les fines couches de couverture (6) soient endommagées sous l'effet d'une température trop élevée.

2. Procédé selon la revendication 1, **caractérisé en ce que** la tôle sandwich (1) est réalisée de préférence en tant que la surface extérieure d'une carrosserie de véhicule automobile et que la sous-structure (2) consiste de préférence en une sous-structure de carrosserie de véhicule automobile.

3. Procédé selon revendication 1 ou 2, **caractérisé en ce que** le bord de la tôle sandwich (1), avant l'assemblage à la tôle pleine est plié à un angle allant jusqu'à 120 ° et relié ensuite, sur son côté extérieur, au bord (8) de la tôle pleine.

4. Procédé selon l'une des revendications 1 à 3, **caractérisé en ce que**, lors du brasage au laser, le faisceau laser est majoritairement dirigé vers le bord (8).

5. Pièce de carrosserie de véhicule automobile, avec une tôle sandwich (1) en tant que la surface extérieure, et avec une sous-structure (2) en tôle pleine, sachant que la tôle sandwich (1) consiste en matériau composite, avec deux fines couches de couverture (6) en acier et une couche noyau (7) intermédiaire en matière synthétique, en particulier en polymère thermoplastique,
**caractérisée en ce que** le bord de la tôle sandwich (1) est plié vers l'intérieur à un angle allant jusqu'à 120 ° et est relié, dans une région non visible, par une ligne de brasage au laser (4), à la tôle pleine de la sous-structure (2), au moins repliée sur elle-même sur son bord ou au moins doublée en épaisseur, sachant que le doublage du bord (8) de la tôle pleine est réalisé de sorte que l'énergie thermique, générée lors du processus de brasage, se trouve ainsi dérivée en direction de la tôle pleine pour empêcher que les fines couches de couverture (6) soient endommagées sous l'effet d'une température trop élevée.
